## Europäisches Patentamt
## European Patent Office
## Office européen des brevets

(19)

(11) Veröffentlichungsnummer: **0 149 817**
**B1**

(12) **EUROPÄISCHE PATENTSCHRIFT**

(45) Veröffentlichungstag der Patentschrift:
**16.09.87**

(51) Int. Cl.⁴: **B 60 P  1/04**

(21) Anmeldenummer: **84115768.8**

(22) Anmeldetag: **19.12.84**

(54) **Kippfahrzeug für den Transport von Schütt- oder Stückgut, insbesondere landwirtschaftlicher Hänger mit Dreiseiten-Kippwerk.**

(30) Priorität: **24.01.84  DE 3402306**

(43) Veröffentlichungstag der Anmeldung:
**31.07.85 Patentblatt 85/31**

(45) Bekanntmachung des Hinweises auf die Patenterteilung:
**16.09.87 Patentblatt 87/38**

(84) Benannte Vertragsstaaten:
**AT CH DE FR GB LI**

(56) Entgegenhaltungen:
**FR - A - 1 294 728**
**GB - A - 847 163**
**US - A - 2 407 012**

(73) Patentinhaber: **Martin Reisch KG Fahrzeugbau,
D-8859 Ehekirchen-Hollenbach (DE)**

(72) Erfinder: **Schmidt, Otto,
D-8859 Ehekirchen-Dinkelshausen (DE)**

(74) Vertreter: **Bockhorni, Josef, Dipl.-Ing. et al,
Plinganserstrasse 18a Postfach 70 02 09,
D-8000 München 70 (DE)**

## Beschreibung

Die Erfindung betrifft ein Kippfahrzeug gemäss dem Oberbegriff von Anspruch 1.

Bei derartigen Kippfahrzeugen handelt es sich insbesondere um landwirtschaftliche Hänger, die mit einem Hinterkipp- oder Dreiseiten-Kippwerk ausgerüstet sind. Ein mit einem Hinterkippwerk ausgerüstetes Fahrzeug ermöglicht ein Verkippen der Ladebrücke nach hinten um eine am Fahrzeugende angebrachte Kippachse, die sich quer zur Fahrtrichtung erstreckt. Ein mit einem Dreiseiten-Kippwerk ausgerüstetes Kippfahrzeug ermöglicht nicht nur ein Kippen der Ladebrücke nach hinten sondern auch zu beiden Seiten des Fahrzeuges hin. Kippfahrzeuge der betrachteten Art sind aber auch einachsige Hänger, Sattelschlepper u. dgl. Fahrzeuge.

Insbesondere in der Landwirtschaft eingesetzte Hänger in einachsiger oder zweiachsiger Bauart werden sehr häufig weit über das zulässige Gesamtgewicht hinaus mit Schütt- oder Stückgut beladen. Wird die Ladebrücke dann nach hinten zur Entladung des aufgenommenen Guts gekippt, so kommt es bei einer ungleichmässigen Beladung der Kippbrücke oder bei einem Festhaften von schwerem Schüttgut in seitlichen Bereichen der Ladebrücke zu einem seitlichen Kippmoment. Bei entsprechenden Lasten hat dies zur Folge, dass die Kippbrücke beim Hochkippen seitlich auswandert und schliesslich der gesamte Hänger umstürzt. Diese Schwierigkeit tritt aber auch dann auf, wenn ein Kippen der Ladebrücke nach hinten auf nicht ebenem Planum erfolgt, da auch dann die angehobene Ladebrücke auswandern und das Fahrzeug zum Umstützen bringen kann.

Es ist zwar bekannt, Hinterkipp-Sattelanhänger mit einem Rückkippstabilisator in Art einer zweigliedrigen Schere auszubilden und diese zwischen Fahrzeugrahmen und Kippbrücke anzuordnen. Der Rückkippstabilisator ist hierbei sowohl am Fahrzeugrahmen wie auch an der Unterseite des Kippaufbaus mittels mehreren Drehgelenken zusätzlich zu den Scherengelenken gelagert. Aufgrund der Vielzahl der Gelenke und des mehrgliedrigen Aufbaus ist ein solcher scherenförmiger Stabilisator konstruktiv zu aufwendig, um in landwirtschaftlichen Hängern eingesetzt zu werden. Infolge der mehrfachen Anlenkung sowohl am Fahrzeugrahmen wie auch am Boden der Ladebrücke eignet sich ein solcher scherenförmiger Stabilisator auch nur für Hinterkipper, da eine Entriegelung der Ladebrücke vom Stabilisator zum Zwecke des seitlichen Kippens der Ladebrücke praktisch kaum realisierbar ist. Aus diesem Grund sind scherenartig aufgebaute Stabilisatoren auch nur für spezielle Baufahrzeuge, nämlich Sattelanhänger angewendet worden, welche lediglich mit einem Hinterkippwerk ausgerüstet sind.

Schliesslich ist ein Kippfahrzeug gemäss dem Oberbegriff des Anspruchs 1 bekannt (CH-A-562 711), bei dem ein knickfest ausgebildeter Stabilisatorbügel verwendet wird, der mit einem Ende am Fahrzeugrahmen angelenkt und mit seinem anderen Ende in einer Längsführung an der Unterseite der Kippbrücke geführt ist. Die Längsführung ist durch eine mittig an der Kippbrücke angeordnete Führungsschiene gebildet, in welcher ein mit Rollen versehenes Fahrgestell aufgenommen ist. Der Stabilisatorbügel ist mit dem Fahrgestell über einen Zapfen gelenkig verbunden. Bei einem Verkippen der Kippbrücke wird der Stabilisatorbügel mit angehoben und bewirkt eine seitliche Führung der Brücke. Bei einseitig verteilten Lasten auf der Kippbrücke oder bei einem Kippen auf einem entsprechend unebenen Planum, kann es aber zu einem Verdrehen der Lastpritsche um den Anlenkpunkt des Stabilisatorbügels an dem in der Führungsschiene geführten Fahrgestell kommen. Insbesondere im Falle einer ungleichmässig verteilten Last, die auf unebenem Planum verkippt wird, wie es gerade bei landwirtschaftlichen Hängern häufig der Fall ist, führt solches jedoch zu einem seitlichen Abweichen der Lastpritsche und ggf. auch zu einem Bruch des Gelenkzapfens bzw. einer Beschädigung des in der Längsführung aufgenommenen Fahrgestells. Abgesehen davon kommt es aufgrund der bei ungleichmässigen Lasten auf die Stabilisatorvorrichtung einwirkenden Drehmomente zu einem allmählichen Ausleiern der Gelenke sowie zu Verklemmungen und auch Verschleiss an der Führungseinrichtung des Stabilisatorbügels, was häufige Wartungsarbeiten am Hänger erforderlich macht. Ferner ist die bekannte Stabilisatorvorrichtung nur für ein Fahrzeug mit einem Hinterkippwerk, nicht jedoch für ein Fahrzeug mit einem Dreiseitenkippwerk anwendbar, weil es an einer geeigneten Entriegelungsmöglichkeit fehlt.

Bei einem weiteren bekannte Rückkippstabilisator (GB-A-847 163) sind an dem an die Kippbühne angeschlossenen Ende des Stabilisatorbügels zwei Ritzel angeordnet, die in Verzahnungen von Zahnstangen eingreifen, die in Längsrichtung auf der Rückseite der Kippbühne angeordnet sind. Hierbei sind die Ritzel fest mit einem Torsionsschaft ausgebildet und damit fest untereinander gekuppelt. Damit soll erreicht werden, das eine gleichmässige Abstützung beider Seiten der Kippbühne bei jedem Neigungswinkel der Kippbühne relativ zum Fahrzeugaufbau gewährleistet wird. Der Nachteil eines solchen Zahnstangengetriebes als Kupplung zwischen Stabilisatorbügel und Kippbühne besteht allerdings darin, dass bei einseitigem Lastangriff, wie es insbesondere bei einem Kippen von ungleichmässiger auf der Kippbühne verteilten Lasten auf unebenem Gelände der Fall ist, es zu einem Verklemmen und Blockieren des Zahnstangengetriebes kommen kann, was schliesslich zu ernsthaften Sicherheitsgefährdungen führt.

Aufgabe der Erfindung ist es, mit einfachen baulichen Massnahmen eine Stabilisierung einer Kippbrücke zu gewährleisten, die auch bei ungleichmässiger Lastverteilung auf der Kippbrücke und beim Kippen auf unebenem Gelände ein seitliches Auswandern und ein Verdrehen der Kippbrücke verhindert, wobei die Stabilisierungsvorrichtung insbesondere für einen Dreiseiten-Kipper anwendbar sein soll.

Diese Aufgabe wird erfindungsgemäss durch die im kennzeichnenden Teil des Anspruchs 1 enthaltenen Merkmale gelöst.

Nach Massgabe der Erfindung wird der Stabilisatorbügel zweifach längsgeführt, indem der Bügel in zwei parallelen Führungsschienen geführt ist, die mit seitlichem Abstand zueinander angeordnet sind. Dadurch wird in jeder Winkellage der Kippbrücke, insbesondere aber in der maximal ausgekippten Stellung eine Stabilisierung gegen Verdrehen der Kippbrücke aufgrund ungleichmässiger Lastverteilung und Kippen auf unebenem Gelände sowie unter diesen Beanspruchungen ein seitliches Auswandern der Kippbrücke verhindert. Aufgrung dieser stabilen Führung der Kippbrücke wird die Stabilisatorvorrichtung kaum auf Verschleiss beansprucht. Aufgrund des einfachen und robusten Aufbaus eignet sich die Vorrichtung insbesondere für landwirtschaftliche Hänger.

Wesentlich ist ferner, dass die Stabilisierungsvorrichtung in einfacher Weise für Dreiseiten-Kipper anwendbar ist, wozu lediglich in den Führungsschienen Schwenkklappen vorgesehen werden, nach deren Ausschwenken bei abgesenkter Kippbrücke der Stabilisatorbügel aus den Führungsschienen fällt, so dass dann die Kippbrücke wahlweise zu beiden Seiten hin verkippt werden kann. Soll nach erfolgter seitlicher Verkippung der Kipper wieder auf Hinterkippstellung eingestellt werden, so braucht lediglich der Stabilisatorbügel in die Führungsschienen eingerückt, was selbsttätig mit dem Absenken der Kippbrücke auf den Fahrzeugrahmen erfolgt, und in dieser Stellung dort durch Zurückklappen der Schwenkklappen gesichert werden.

Da die Ausbildung der Brücke und der Führung ohne baulichen Aufwand ist, wird das Fahrzeug den robusten Einsatzbedingungen, denen ein landwirtschaftliches Fahrzeug ausgesetzt wird, gerecht. Aufgrund des einfachen Aufbaus ergeben sich auch geringe Herstellkosten, die den Einsatz einer solchen Sicherungseinrichtung für landwirtschaftliche Fahrzeuge überhaupt vertretbar machen.

Zweckmässige Ausgestaltungen der Erfindung sind durch die in den Unteransprüchen enthaltenen Merkmale gekennzeichnet.

Nachfolgend werden Ausführungsbeispiele der Erfindung anhand der rein schematischen Zeichnung beschrieben. Darin zeigen

Fig. 1 eine Seitenansicht eines landwirtschaftlichen Kippanhängers,

Fig. 2 eine Ansicht des in Fig. 1 dargestellten Hängers von vorne mit nach hinten gekippter Kippbrücke,

Fig. 3 eine Draufsicht auf ein Ausführungsbeispiel eines Stabilisatorbügels,

Fig. 4 eine Draufsicht auf eine weitere Ausführungsform eines Stabilisatorbügels zusammen mit einer Schnittansicht, und

Fig. 5 eine Einzelheit der Entriegelungseinrichtung des in Fig. 1 dargestellten Hängers.

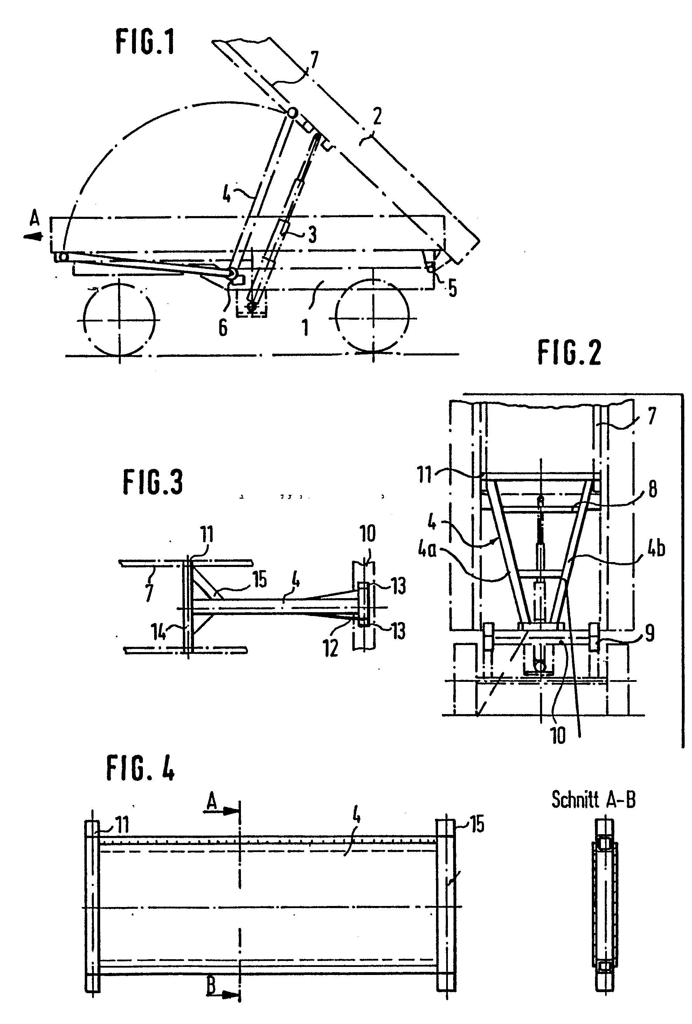

Bei dem in Fig. 1 dargestellten Kippfahrzeug handelt es sich um einen landwirtschaftlichen Hänger, der mit einer Dreiseitenkippeinrichtung versehen ist, so dass die auf dem Fahrzeugrahmen 1 angeordnete Kippbrücke 2 nach drei Seiten gekippt werden kann, nämlich nach hinten entsprechend der Darstellung in Fig. 1 sowie zu den beiden Seiten des Hängers hin. Als Kippeinrichtung dient hierbei ein in Fig. 1 allgemein mit 3 bezeichneter mehrstufiger Arbeitszylinder bekannter Bauart, der in der üblichen Weise hydraulisch betätigt wird. Der Arbeitszylinder 3 ist einerseits am Fahrzeugrahmen 1 und andererseits mit dem vordersten Ende der Kolbenstange an der Kippbrücke 2 angelenkt.

Der mit 4 bezeichnete Stabilisatorbügel dient zum Stabilisieren beim Kippen der Kippbrücke 2 nach hinten um die mit 5 bezeichnete Kippachse am Ende des Hängers. Der Stabilisatorbügel 4 ist knickfest, also in sich steif ausgebildet und entsprechend dem in Fig. 1 dargestellten Ausführungsbeispiel mit seinem einen Ende am Fahrzeugrahmen 1 bei 6 angelenkt und mit seinem anderen Ende verschieblich in einer allgemein mit 7 bezeichneten Führung an der Ladebrücke 2 geführt. Die in Fig. 1 dargestellte Festlegung ist die bevorzugte Lagerung. Gleichwohl kann je nach Anwendungsfall auch die Lagerung umgekehrt erfolgen, also der Bügel 4 an der Ladebrücke 2 angelenkt und längs des Fahrzeugrahmens 1 verschieblich geführt sein. Der Einfachheit halber wird im folgenden stets auf die Lagerung gemäss Fig. 1 bezug genommen.

In Fahrtrichtung A gesehen ist der Bügel 4 vor dem Arbeitszylinder 3 und zwar im wesentlichen in der Mitte des Hängers 1 angeordnet. Diese Anordnung ist aus Lastverteilungsgründen vorteilhaft. Der bei 6 dargestellte Anlenkpunkt kann jedoch auch in Fahrtrichtung A gesehen weiter vorne liegen, wobei dies letztlich durch die Länge des Bügels 4 bestimmt ist, der in abgesenkter Lage, wie in Fig. 1 mit durchgezogener Linie dargestellt, nicht über den Ladebrückenaufbau nach vorne vorstehen soll. Wird die Kippbrücke 2 zwecks Kippung nach hinten um die Achse 5 durch den Arbeitszylinder 3 angehoben, so wird infolge des Eingriffs des Bügels 4 in die Führung 7 der bügel 4 selbsttätig nach oben geschwenkt, wobei er infolge der Zwangsführung bei 7 den Kippbrückenaufbau stabilisiert. Diese Stabilisierung erfolgt bereits mit dem Anheben der Kippbrücke, wobei mit zunehmendem Kippwinkel nach rückwärts die Kippbrücke auf unebenem Gelände quer zur Fahrtrichtung parallel zum Fahrgestell ausgerichtet wird. Auch bei sehr starker Schräglage und ungleicher Lastverteilung fängt sich die Kippbrücke in den Kipplagern.

Gemäss der Darstellung in Fig. 2 besteht der Bügel 4 aus einem Rahmen mit zwei Armen 4a und 4b, wobei der Rahmen mittels Querträger 8 versteift ist. Der Rahmen selbst ist aus Profilen zusammengeschweisst und besitzt bei der Darstellung gemäss Fig. 2 einen im wesentlichen trapezförmigen Grundriss. Er ist auf einem die beiden Längsträger 9 des Fahrzeugrahmens 1 miteinander verbindenden, etwa in Fahrzeugmitte angeordneten Querträger 10 in zwei Lagerbuchsen angelenkt. An der längeren Trapezseite, also an den Enden der Arme 4a und 4b ist der Bügel 4 mit Führungselementen 11 in der Führung 7 gelagert. Bei den Führungselementen 11 handelt es sich zweckmässigerweise um seitlich vorstehende Gleitzapfen oder Rollen, welche in die schienenförmigen Führungen 7 eingreifen. Bei der Darstellung in Fig. 2 sind die Führungsschienen 7 U-förmig ausgebildet, wobei die offenen Seiten des Profils aufeinander zu weisen. Die Führungsschienen 7 sind parallel zueinander in Längsrichtung des Hängers, also in Fahrtrichtung und damit senkrecht zur Kippachse 5 für die Hinterkippung angeordnet.

Der in Fig. 3 dargestellte Bügel 4 ist einarmig ausgebildet und besitzt an seinem unteren Ende eine Querstange 12, mittels der der Bügel 4 in zwei seitlich angeordneten Lagerbuchsen 13 am Querträger 10 schwenkbar gelagert ist. Am oberen Ende des Bügels 4 ist eine weitere Querstange 14 angeschweisst, die an den Enden mit Führungszapfen oder Rollen als Führungselemente 11 versehen ist. Die Führungselemente 11 greifen wiederum in U-förmige Führungsschienen 7 ein. Ferner sind aus Fig. 3 Versteifungen 15 ersichtlich.

Der in Fig. 4 dargestellte Stabilisatorbügel 4 ist aus einem rechteckförmigen Kastenprofil geschweisst, welches an einem Ende Schwenkzapfen 15 für den Eingriff in die fest am Fahrzeugrahmen 1 ausgebildeten Lagerbuchsen aufweist. Am anderen Ende besitzt das Kastenprofil als Führungszapfen oder Führungsrollen ausgebildete Führungselemente 11 für den Eingriff in die Führungsschienen 7, wie am besten aus der Schnittdarstellung A-B ersichtlich ist.

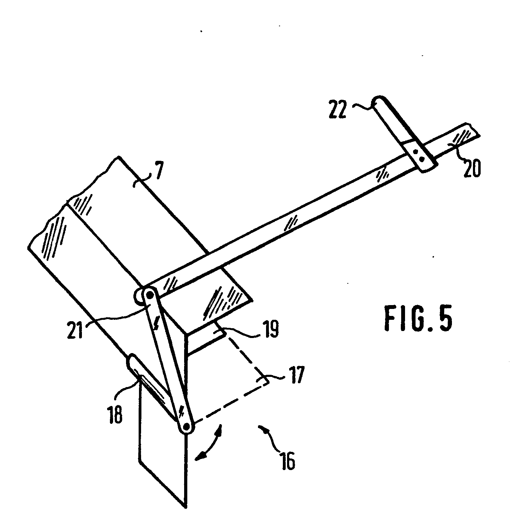

Fig. 5 zeigt schliesslich eine Entriegelungseinrichtung 16, die bei einem Dreiseiten-Kippwerk Anwendung findet, um bei einem Kippen der Ladebrücke 2 zur Seite hin den Bügel 4 von der Führung 7 abzukoppeln. Aus der schematischen Darstellung in Fig. 5 ergibt sich, dass die U-förmige Führungsschiene 7 mit einer Schwenkklappe 17 ausgebildet ist, die um ein Gelenkscharnier 18 nach unten aus der durch den U-Schenkel 19 gebildeten Führungsfläche wegschwenkbar ist. Hierbei befindet sich die Schwenkklappe 17 gerade an der Stelle, an welcher sich die Führungselemente 11 des Bügels 4 in dessen abgesenkter Lage befindet, die in Fig. 1 mit durchgezogener Linie dargestellt ist. Wird in dieser Stellung nämlich die Schwenkklappe 17 nach unten abgeschwenkt, so fällt der Bügel 4 nach unten auf den Fahrzeugrahmen 1, so dass der Bügel 4 gegenüber den Führungsschienen 7 entriegelt und damit frei ist. Erst danach kann der Kippvorgang zur Seite hin bewerkstelligt werden.

Die Entriegelung erfolgt mechanisch in einfacher Weise über eine Querstange 20, welche die Schwenkklappen 17 der beiden Führungsschienen 7 miteinander verbindet, wozu geeignete Zwischenlenker 21 vorgesehen sind. Durch entsprechendes Verschwenken der Querstange 20 mittels eines Handgriffes 22 können die Schwenkklappen 17 in die in Fig. 5 strichliert dargestellte Stellung oder aus dieser in die festausgezogene Stellung ausgeschwenkt werden. In der strichliert dargestellten Stellung der Schwenkklappen 17 sind diese Teil der Führungsfläche 19.

**Patentansprüche**

1. Kippfahrzeug für den Transport von Schütt- oder Stückgut, insbesondere landwirtschaftlicher Hänger mit Dreiseiten-Kippwerk, mit einem zwischen der Kippbrücke (2) des Fahrzeuges und dem Fahrzeugrahmen (1) angeordneten Rückkippstabilisator, der durch einen knickfesten Stabilisatorbügel (4) gebildet ist, der mit einem Ende am Fahrzeugrahmen (1) angelenkt und mit seinem anderen Ende an der Kippbrücke (2) in Fahrzeuglängsrichtung in mindestens einer Führungsschiene mittels Führungsrollen oder Gleitzapfen verschieblich geführt ist oder umgekehrt, dadurch gekennzeichnet, dass der Stabilisatorbügel (4) in zwei parallel und mit seitlichem Abstand zueinander angeordneten Führungsschienen (7) geführt ist, die mit Schwenkklappen (17) zum Entriegeln des längsgeführten Endes des Stabilisatorbügels (4) versehen sind, die Teil der Führungsflächen (19) der Führungsschienen (7) sind und auf denen in abgesenkter Stellung der Kippbrücke (2) das geführte Ende des Stabilisatorbügels (4) aufliegt.

2. Kippfahrzeug nach Anspruch 1, dadurch gekennzeichnet, dass die Führungsschienen (7) benachbart der Seitenränder des Hängers angeordnet sind.

3. Kippfahrzeug nach Anspruch 1 oder 2, dadurch gekennzeichnet, dass der Stabilisatorbügel (4) aus einem rechteckförmigen Kastenprofil gebildet ist, welches an seiner Schmalseite mit seitlich am Bügel angeordneten Führungsrollen in den beiden Führungsschienen (7) geführt ist.

4. Kippfahrzeug nach einem der Ansprüche 1 bis 3, mit einem im wesentlichen trapezförmigen Stabilisatorbügel, dadurch gekennzeichnet, dass der Stabilisatorbügel mit seiner längeren Trapezseite mit seitlich am Bügel angeordneten Führungsrollen in den beiden Führungsschienen (7) geführt ist.

5. Kippfahrzeug nach einem der Ansprüche 1 bis 3, dadurch gekennzeichnet, dass der Stabilisatorbügel aus einem Längsprofil mit an beiden Profilenden angeschweissten Armen (4a, 4b) gebildet ist, von denen einer an seinen beiden Enden die Führungsrollen trägt.

6. Kippfahrzeug nach einem der vorhergehenden Ansprüche, dadurch gekennzeichnet, dass der Stabilisatorbügel (4) in Fahrtrichtung vor der Kippeinrichtung (3) angeordnet ist.

7. Kippfahrzeug nach einem der vorhergehenden Ansprüche, dadurch gekennzeichnet, dass die Schwenkklappen (17) durch eine Querstange (20) über Zwischenlenker (21) gekoppelt sind, welche manuell zum Ausklappen und Einklappen der Schwenkklappen (17) verstellbar ist.

**Claims**

1. A dumping vehicle for transporting bulk material or piece material, in particular an agricultur trailer with a three-sided dumping mechanism, having a tiltback stabilizer disposed between the dump body (2) of the vehicle and the frame (1) of the vehicle, said stabilizer being formed by a non-buckling stabilizer bar (4) hinged at one end to the frame (1) of the vehicle and guided displaceably at the other end on the dump body (2) in the longitudinal direction of the vehicle in at least one guide rail by means of guide rollers or slide pegs, or vice versa characterized in that the stabilizer bar (4) is guided in two parallel guide rails (7) spaced laterally from each other and provided with hinged flaps (17) for unlocking the longitudinally guided end of the stabilizer bar (4) which are part of the guide surfaces (19) of the guide rails (7) and on which the guided end of the stabilizer bar (4) lies when the dump body (2) is in the lowered position.

2. The dumping vehicle according to claim 1, characterized in that the guide rails (7) are disposed adjacent to the side edges of the trailer.

3. The dumping vehicle according to claim 1 or 2, characterized in that the stabilizer bar (4) is formed of a rectangular box profile guided in the two guide rails (7) on its narrow side with guide rollers disposed laterally on the bar.

4. The dumping vehicle according to any of claims 1 to 3, having a substantially trapezoidal stabilizer bar, characterized in that the stabilizer bar is guided in the two guide rails (7) with its longer trapeze side with guide rollers disposed laterally on the bar.

5. The dumping vehicle according to any of claims 1 to 3, characterized in that the stabilizer bar is formed of a longitudinal profile with arms (4a, 4b) welded to both profile ends, one arm bearing the guide rollers at both its ends.

6. The dumping vehicle according to any of the above claims, characterized in that the stabilizer bar (4) is disposed before the dumping means (3) in the direction of travel.

7. The dumping vehicle according to any of the above claims, characterized in that the hinged flaps (17) are coupled by a cross bar (20) via intermediate rods (21) which is manually adjustable for swinging the hinged flaps (17) in and out.

**Revendications**

1. Véhicule basculant pour le transport de matières en vrac ou en morceaux, notamment remorque agricole comportant un dispositif de basculement trilatéral, qui comprend, entre le pont basculant (2) du véhicule et le cadre (1) du véhicule, un stabilisateur empêchant tout basculement vers l'arrière qui est constitué par un étrier de stabilisateur (4), résistant à la compression et au flambage, qui s'articule à l'une de ses extrémités sur le cadre (1) du véhicule et à son autre extrémité sur le pont basculant (2), où il est guidé de manière à se déplacer dans le sens de la longueur du véhicule ou inversement, dans au moins une glissière de guidage au moyen de galets de guidage ou de tenons coulissants, caractérisé en ce que l'étrier (4) du stabilisateur est guidé dans deux glissières de guidage (7), parallèles l'une à l'autre et situées à une certaine distance l'une de l'autre, qui sont munies de clapets pivotants (17) assurant le déverrouillage de l'extrémité de l'étrier (4) du stabilisateur qui est guidé dans le sens longitudinal, font partie des surfaces de guidage (19) des glissières de guidage (7) et sur lesquelles l'extrémité guidée de l'étrier (4) du stabilisateur prend appui quand le pont basculant (2) est à sa position basse.

2. Véhicule basculant selon la revendication 1, caractérisé en ce que les glissières de guidage (7) sont à proximité des bords latéraux de la remorque.

3. Véhicule basculant selon l'une des revendications 1 ou 2, caractérisé en ce que l'étrier (4) du stabilisateur est constitué par un profil en caisson rectangulaire qui, au niveau de son côté le plus étroit, est guidé dans les deux glissières de guidage (7) par des galets de guidage montés sur les côtés de l'étrier.

4. Véhicule basculant selon l'une des revendications 1 à 3, comportant un étrier de stabilisateur sensiblement trapézoïdal, caractérisé en ce que l'étrier de stabilisateur est, au niveau de son côté le plus large, guidé dans les deux glissières de guidage (7) par des galets de guidage montés sur les côtés de l'étrier.

5. Véhicule basculant selon l'une des revendications 1 à 3, caractérisé en ce que l'étrier de stabilisateur est constitué par un profil longitudinal comportant, a ses deux extrémités, des bras (4a, 4b) fixés par soudage dont l'un porte les galets de guidage à ses deux extrémités.

6. Véhicule basculant selon l'une des revendications 1 à 5, caractérisé en ce que l'étrier de stabilisateur (4) est situé, dans le sens de la marche du véhicule, en avant du dispositif basculant (3).

7. Véhicule basculant selon l'une des revendications 1 à 6, caractérisé en ce que les clapets pivotants (17) sont accouplés par une traverse (20) par l'intermédiaire de barres intermédiaires (21) qui peuvent être déplacées à la main pour le mouvement dans les deux sens des clapets pivotants (17).

**FIG.1**

**FIG.2**

**FIG.3**

**FIG. 4**

Schnitt A-B

FIG. 5